# EUROPEAN PATENT APPLICATION

(11) **EP 1 903 445 A1**
(43) Date of publication of application: **26.03.2008**
(21) Application number: 06768052.0
(22) Date of filing: 10.07.2006
(51) Int. Cl.: G06F 13/00, G10K 15/02, H04N 7/173

(54) **CONTENTS SERVER APPARATUS, CONTENTS TRANSFERRING APPARATUS AND CONTENTS REPRODUCING APPARATUS**

(30) Priority: 12.07.2005 JP 2005203386
(71) Applicant: MITSUBISHI ELECTRIC CORPORATION, Chiyoda-ku Tokyo 100-8310 (JP)
(72) Inventor: MIURA, Shin, c/o Mitsubishi Electric Corp., Tokyo 100-8310 (JP); IMAI, Shigeru, c/o Mitsubishi Electric Corp., Tokyo 100-8310 (JP); HANADA, Takehiko, c/o Mitsubishi Electric Corp., Tokyo 100-8310 (JP); AKATSU, Shinji, c/o Mitsubishi Electric Corp., Tokyo 100-8310 (JP); MATSUBARA, Masami, c/o Mitsubishi Electric Corp., Tokyo 100-8310 (JP)
(74) Representative: Gleiter, Hermann
(86) International application number: PCT/JP2006/313690
(87) International publication number: WO 2007/007716

(57) **Abstract**

While a user, who registers new music CD data to a content server apparatus 10 (PC of the user's own house), comes and goes between user's own house and a car equipped with a content playback apparatus 30 (car audio system) with having a content transfer apparatus 20 (mobile phone terminal), contents registered in the content server apparatus 10 are transferred to the content playback apparatus 30 via the content transfer apparatus 20 by the wireless LAN without any particular operation of the user.

## Description

### TECHNICAL FIELD

The present invention relates to a content server apparatus, content transfer apparatus and content playback apparatus for transferring and storing contents.

### BACKGROUND ART

In recent years, car navigation systems, car audio systems and the like including hard disk drives have been spreading, and a using method has been established which stores music data of a lot of CDs in a hard disk in the form of MP3 (MPEG1 Audio Layer 3) data or the like, and allows a user to listen by playing back from the hard disk. As for the car navigation systems or car audio systems currently on the market, however, the CDs must be brought to the systems for recording, which offers a problem of taking the trouble to carry the CDs there.

As a means for solving such a problem, a conventional example described in Patent Document 1 discloses a technique of transferring contents in a server in a user's own house to a car navigation system using a public network.
In addition, a conventional example described in Patent Document 2 discloses a method of connecting between a user's own house and onboard equipment via a wireless LAN rather than via a public network.

Patent Document 1: Japanese patent laid-open No. 2004-212415 (paragraph 0017).
Patent Document 2: Japanese patent laid-open No.2004-37981 (paragraph 0029).

With the foregoing configurations, the conventional apparatuses have the following problems. As for Patent Document 1, which transfers contents via the public network, there are such problems of incurring communication expenses and of taking the trouble of connecting to the public network. As for Patent Document 2, which transfers contents via the wireless LAN, although the communication expenses do not arise, it is necessary to park the car within a communicable area of the wireless LAN, which is troublesome and will severely limit the number of users employing the method.

The present invention is implemented to solve the foregoing problems. Therefore it is an object of the present invention to provide a content server apparatus, content transfer apparatus and content playback apparatus capable of transferring and storing the contents easily without any particular operations.

### DISCLOSURE OF THE INVENTION

The content server apparatus according to the present invention is an apparatus that transfers stored contents to a content transfer apparatus, the content server apparatus comprising: a content storing section for storing registered contents; a content management section for maintaining a content management table that manages, for each content stored in the content storing section, as to whether the content has already been transferred to the content transfer apparatus or not; a content transfer apparatus management section for maintaining a content transfer apparatus management table that manages, for each identifier information for uniquely identifying the content transfer apparatus, a connectable/unconnectable state decided by a user; and a content transfer control section for acquiring the identifier information of the content transfer apparatus to check connection authorization by referring to the content transfer apparatus management table, and for transferring to the content transfer apparatus an untransferred content among the contents stored in the content storing section by referring to the content management table.

The present invention offers an advantage of being able to transfer and store contents easily without any particular operation.

### BRIEF DESCRIPTION OF THE DRAWINGS

FIG. 1 is a block diagram showing a system configuration including a content server apparatus, content transfer apparatus and content playback apparatus of an embodiment 1 in accordance with the present invention;
FIG. 2 is a block diagram showing a configuration of the content server apparatus of the embodiment 1 in accordance with the present invention;
FIG. 3 is a block diagram showing a configuration of the content transfer apparatus of the embodiment 1 in accordance with the present invention;
FIG. 4 is a block diagram showing a configuration of the content playback apparatus of the embodiment 1 in accordance with the present invention;
FIG. 5 is a diagram illustrating a processing sequence between the content server apparatus and the content transfer apparatus of the embodiment 1 in accordance with the present invention;
FIG. 6 is a diagram showing a content transfer apparatus management table maintained by a content transfer apparatus management section of the content server apparatus of the embodiment 1 in accordance with the present invention;
FIG. 7 is a flowchart illustrating the processing of the content transfer apparatus management section of the content server apparatus of the embodiment 1 in accordance with the present invention;
FIG. 8 is a diagram showing an example of a user interface to be presented to a user for asking whether to connect or not when the content transfer apparatus management section of the content server apparatus of the embodiment 1 in accordance with the present invention detects a new content transfer apparatus;
FIG. 9 is a diagram showing a content management table the content management section of the content server apparatus of the embodiment 1 in accordance with the present invention maintains and manages;
FIG. 10 is a diagram illustrating a processing sequence between the content transfer apparatus and the content playback apparatus of the embodiment 1 in accordance with the present invention;
FIG. 11 is a block diagram showing a configuration of a content playback apparatus of an embodiment 2 in accordance with the present invention;
FIG. 12 is a diagram showing a content management table and group management table the content playback apparatus of the embodiment 2 in accordance with the present invention prepares and manages;
FIG. 13 is a diagram illustrating a processing sequence between the content transfer apparatus and the content playback apparatus of the embodiment 2 in accordance with the present invention;
FIG. 14 is a diagram illustrating a processing sequence between the content transfer apparatus and the content playback apparatus of an embodiment 3 in accordance with the present invention;
FIG. 15 is a diagram illustrating a processing sequence between the content server apparatus and the content transfer apparatus of the embodiment 3 in accordance with the present invention; and
FIG. 16 is a diagram showing a content playback apparatus management table the content server apparatus of the embodiment 3 in accordance with the present invention manages.

### BEST MODE FOR CARRYING OUT THE INVENTION

The best mode for carrying out the invention will now be described with reference to the accompanying drawings to explain the present invention in more detail.

### EMBODIMENT 1

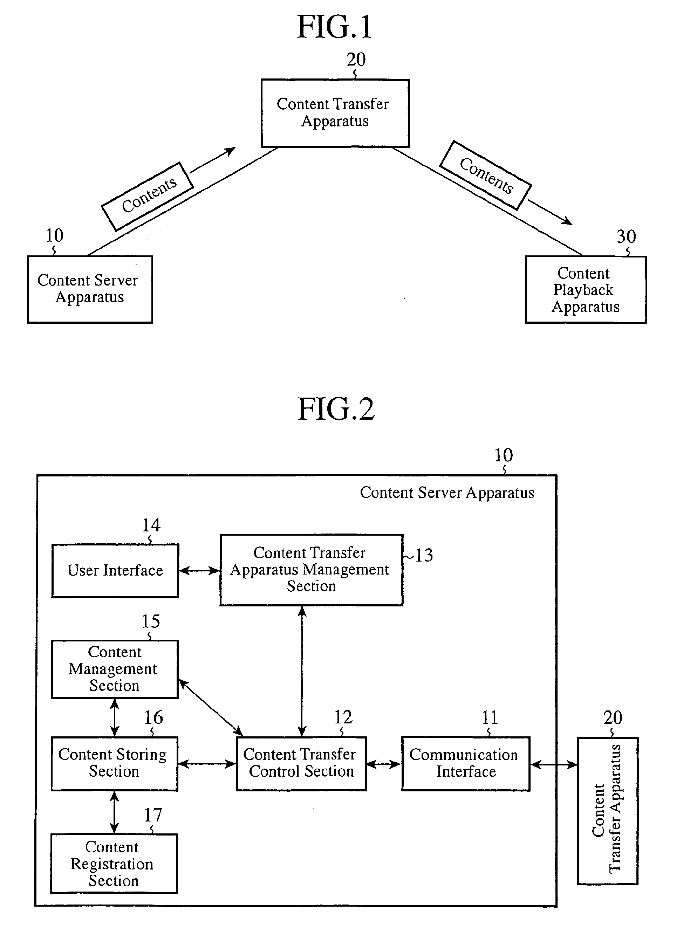

FIG. 1 is a block diagram showing a system configuration including a content server apparatus, content transfer apparatus and content playback apparatus of an embodiment 1 in accordance with the present invention. In FIG. 1, the content server apparatus 10 stores and manages contents; the content transfer apparatus 20 receives and stores the contents temporarily by carrying out communication with the content server apparatus 10 via a wireless LAN, and transfers the contents temporarily stored to the content playback apparatus 30 via the wireless LAN; and the content playback apparatus 30 stores and plays back the contents received from the content transfer apparatus 20. As for the types of the contents, any contents will do as long as they can be stored and then played back such as videos, music and photographs.

FIG. 2 is a block diagram showing a configuration of the content server apparatus 10 of the embodiment 1 in accordance with the present invention. The content server apparatus 10 includes a communication interface 11, a content transfer control section 12, a content transfer apparatus management section 13, a user interface 14, a content management section 15, a content storing section 16 and a content registration section 17.

In FIG. 2, the communication interface 11 carries out communication with the content transfer apparatus 20 via the wireless LAN connecting between them, and the content transfer control section 12 controls transfer of the contents to the content transfer apparatus 20. The content transfer apparatusmanagement section 13, which holds the identifier information of the content transfer apparatus 20 registered as an appropriate communication party, checks, when the content transfer apparatus 20 is connected, whether it is a content transfer apparatus 20 already registered or a new content transfer apparatus 20, and notifies and requests, when it is a new content transfer apparatus 20, a user whether to register it as a communication party.

Receiving notification of detecting the new content transfer apparatus 20 from the content transfer apparatus management section 13, the user interface 14 notifies the user of that, accepts from the user an input as to whether to register the detected content transfer apparatus 20 as the communication party, and sends the result back to the content transfer apparatus management section 13. The content management section 15 maintains a content management table for managing the contents stored in the content storing section 16, and the content storing section 16 stores the contents registered by the content registration section 17. The content registration section 17 registers the new contents to the content storing section 16 in response to a request from the user.

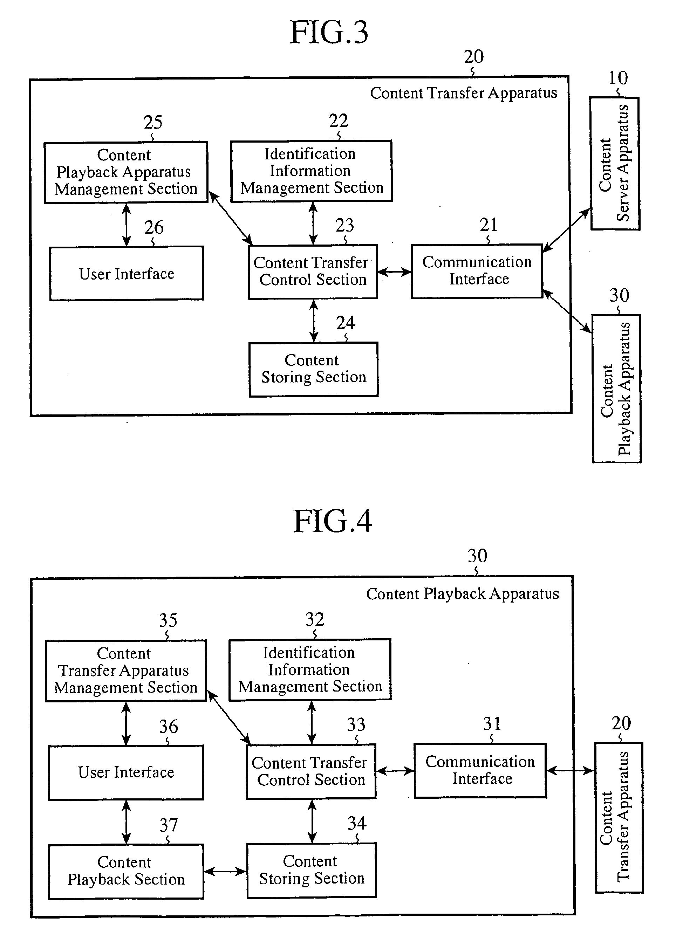

FIG. 3 is a block diagram showing a configuration of the content transfer apparatus 20 of the embodiment 1 in accordance with the present invention. The content transfer apparatus 20 includes a communication interface 21, an identification information management section 22, a content transfer control section 23, a content storing section 24, a content playback apparatus management section 25 and a user interface 26.

In FIG. 3, the communication interface 21 carries out communication with the content server apparatus 10 and the content playback apparatus 30 via the wireless LAN connecting between them, and the identification information management section 22 manages the identifier information that enables unique identification of the content transfer apparatus 20. The content transfer control section 23 controls transmission and reception between the content transfer apparatus 20 and the content server apparatus 10 or the content playback apparatus 30. The content storing section 24 temporarily stores the contents transferred from the content server apparatus 10.

The content playback apparatus management section 25, which maintains the identifier information of the content playback apparatus 30 registered as an appropriate communication party, checks, when the content playback apparatus 30 is connected, whether it is a content playback apparatus 30 already registered or a new content playback apparatus 30, and notifies and requests, when it is a new content playback apparatus 30, a user whether to register it as a communication party. Receiving notification of detecting the new content playback apparatus 30 from the content playback apparatus management section 25, the user interface 26 notifies the user of that, accepts from the user an input as to whether to register the detected content playback apparatus 30 as the communication party, and sends the result back to the content playback apparatus management section 25.

FIG. 4 is a block diagram showing a configuration of the content playback apparatus 30 of the embodiment 1 in accordance with the present invention. The content playback apparatus 30 includes a communication interface 31, an identification information management section 32, a content transfer control section 33, a content storing section 34, a content transfer apparatus management section 35, a user interface 36 and a content playback section 37.

In FIG. 4, the communication interface 31 is connected to the content transfer apparatus 20 via the wireless LAN to carry out communications, and the identification information management section 32 manages the identifier information that enables unique identification of the content playback apparatus 30. The content transfer control section 33 controls transmission and reception of the contents between it and the content transfer apparatus 20. The content storing section 34 stores the content transferred from the content transfer apparatus 20.

The content transfer apparatus management section 35 maintains the identifier information of the content transfer apparatus 20 registered as an appropriate communication party, and checks whether it is the content transfer apparatus 20 already registered or a new content transfer apparatus 20 when the content transfer apparatus 20 is connected. When it is a new content transfer apparatus 20, the content transfer apparatus management section 35 notifies the user of it, and requests the user to make a decision whether to register it as a communication party or not. The user interface 36 accepts the input from the user when it carries out playback control of the contents or registration of the content transfer apparatus 20. The content playback section 37 plays back the contents stored in the content storing section 34 in response to instructions of the user.

Next, the operation will be described.
Here, the operation will be described from the time when the contents are registered to the content server apparatus 10 to the time when the contents are transferred to the content playback apparatus 30 via the content transfer apparatus 20. In addition, the description will be made of the case where the content server apparatus 10 is a PC installed in a house, the contents are music, the content transfer apparatus 20 is a mobile phone terminal, and the content playback apparatus 30 is a car audio system installed in a car, and a wireless communication scheme such as Bluetooth (registered trademark) is used for the communication although a wire communication scheme is also applicable.

When the user buys a new music CD, he or she has the content registration section 17 (generally a CD-ROM drive in this case) of the content server apparatus 10 (the PC in this case) read the music CD, and stores its contents to the content storing section 16 after converting to an MP3 file or the like.

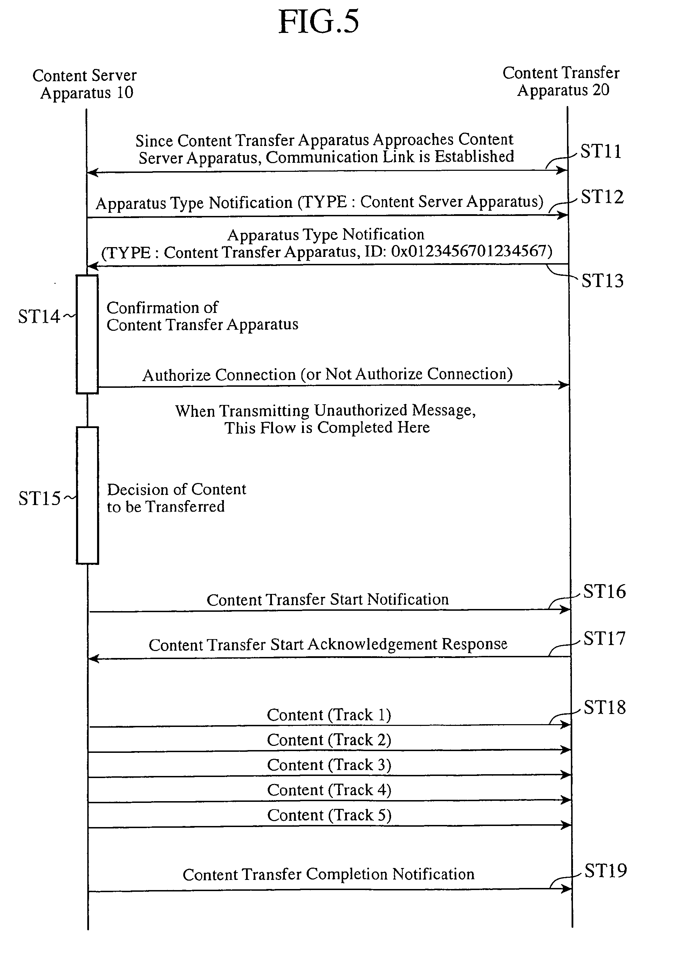

FIG. 5 is a diagram illustrating a processing sequence between the content server apparatus 10 and the content transfer apparatus 20 from the time when the content server apparatus 10 and content transfer apparatus 20 detect one another to the time when the contents are transferred. Referring to FIG. 5, the operation until the contents registered in the content server apparatus 10 are transferred to the content transfer apparatus 20 will be described.

At step ST11, when the user brings the content transfer apparatus 20 (a mobile phone having a Bluetooth interface in this example: Bluetooth is a registered trademark) near the content server apparatus 10, a communication link is established between them because the content server apparatus 10 and content transfer apparatus 20 detect each other.

At step ST12, the content server apparatus 10 notifies the content transfer apparatus 20 of its own apparatus type (content server apparatus). At step ST13, the content transfer apparatus 20 notifies the content server apparatus 10 of its own apparatus type (content transfer apparatus) and its identifier information (a value 0x0123456701234567 in this example). Through the processing at steps ST12 and ST13, they recognize the types of the communication party apparatuses of each other.

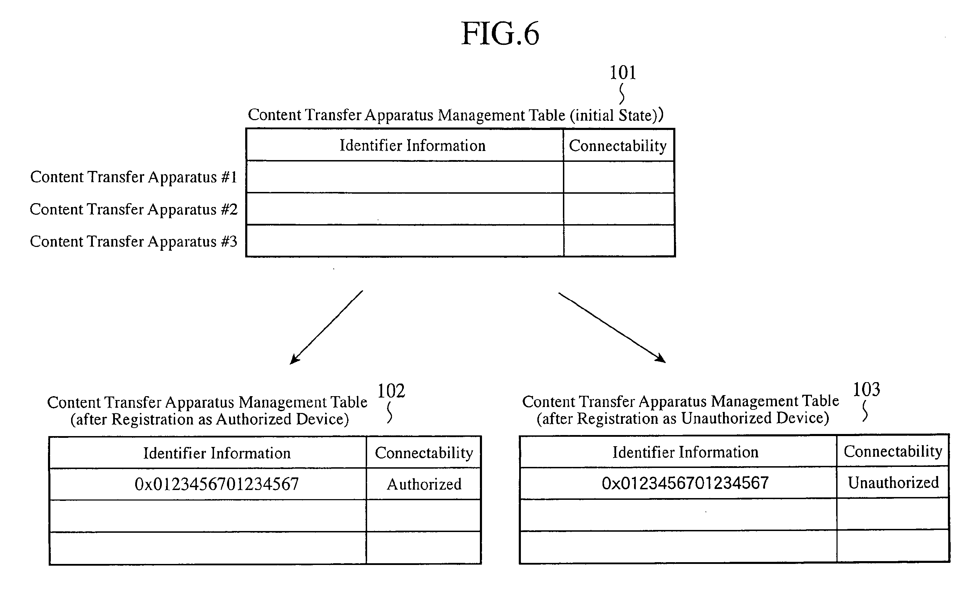

At step ST14, the content transfer apparatus management section 13 of the content server apparatus 10 confirms whether the content transfer apparatus 20 connected is the apparatus that has already been registered as an authorized device to which the contents can be transmitted. If it is a new content transfer apparatus 20, the content transfer apparatus management section 13 requests the user to decide whether he or she refuses its registration or not. The details of the processing at step ST14 will be described with reference to FIG. 6, FIG. 7 and FIG. 8.

FIG. 6 is a diagram showing a content transfer apparatus management table the content transfer apparatus management section 13 maintains. It stores the identifier information of each content transfer apparatus 20 registered, and the identifier information of each content transfer apparatus 20 whose connection is to be refused separately. FIG. 6 shows a content transfer apparatus management table 101 in an initial state, a content transfer apparatus management table 102 after registration as an authorized device, and a content transfer apparatus management table 103 after registration as an unauthorized device.

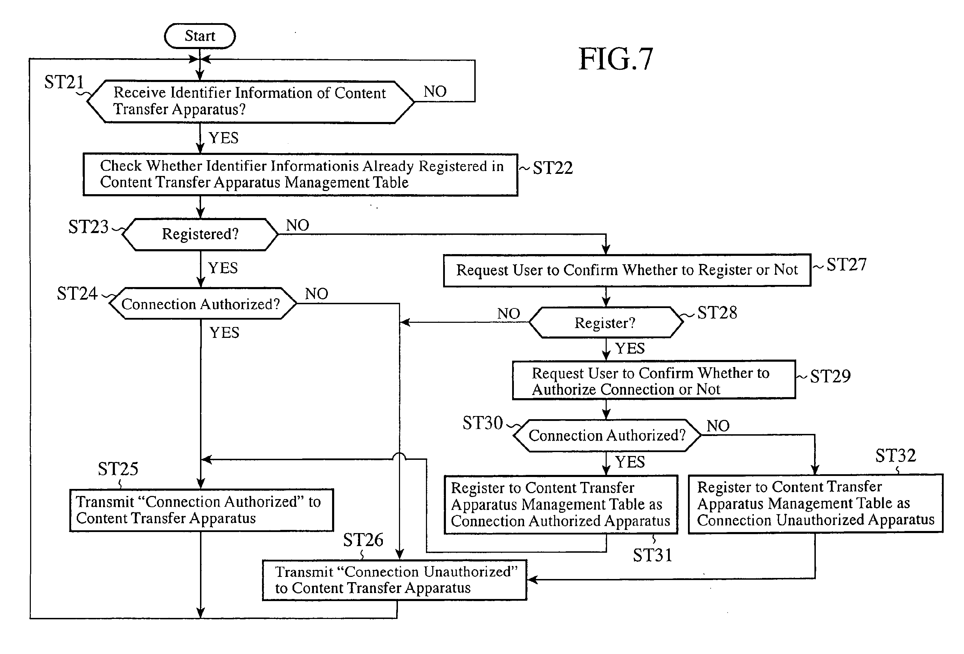

FIG. 7 is a flowchart illustrating the processing of the content transfer apparatus management section 13.

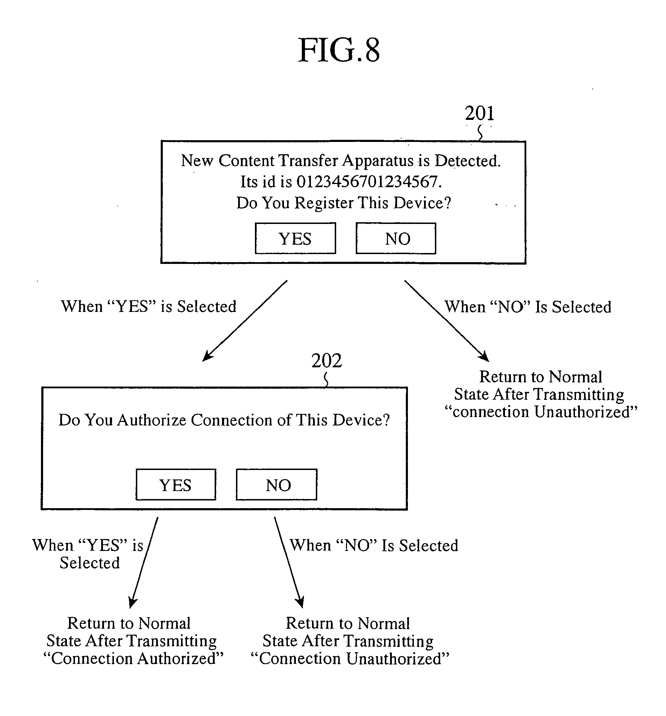

FIG. 8 is a diagram illustrating an example of a user interface to be presented to the user for making a connectable/unconnectable decision when a new content transfer apparatus 20 is found.

The details of the processing at step ST14 will now be described with reference to the flowchart shown in FIG. 7.
When the content transfer apparatus 20 is detected, the content transfer control section 12 sends to the content transfer apparatus management section 13 the identifier information of the content transfer apparatus 20 newly found. At step ST21, the content transfer apparatus management section 13 confirms the reception of the identifier information, and proceeds to step ST22.

The content transfer apparatus management section 13 maintains the content transfer apparatus management table as shown in FIG. 6 to manage the content transfer apparatus 20. At step ST22, the content transfer apparatus management section 13 searches the content transfer apparatus management table to check whether the received identifier information has already been registered or not. Here is assumed the content transfer apparatus management table 101 in the initial state. Since the received identifier information (0x0123456701234567) is not yet registered, the processing proceed to step ST27 according to the decision at step ST23.

At step ST27, the content transfer apparatus management section 13 leaves a matter to user's choice through the user interface 201 shown in FIG. 8 via the user interface 14 to request the user to decide on whether to register the new content transfer apparatus 20 or not. When the user selects "NO" here, the processing proceeds to step ST26 according to the decision at step ST28 of FIG. 7. At step ST26, the content transfer apparatus management section 13 sends a message "connection unauthorized" to the content transfer apparatus 20 via the content transfer control section 12 and communication interface 11, and completes the processing for the content transfer apparatus 20. When the user selects "YES", the processing proceeds to step ST29 according to the decision at step ST28. At step ST29, the content transfer apparatus management section 13 requests the user through the user interface 202 shown in FIG. 8 to decide on whether the content transfer apparatus 20 is to be registered as a connection authorized device or a connection unauthorized device.

When the user selects "YES" in the user interface 202 shown in FIG. 8, the processing proceeds to step ST31 according to the decision at step ST30. At step ST31, the content transfer apparatus management section 13 registers it to the content transfer apparatus management table as a connection authorized apparatus. Thus,the content transfer apparatus management table 101 in the initial state becomes the content transfer apparatus management table 102 after the registration, in which the content transfer apparatus 20 is indicated as a "connection authorized" device. Then, at step ST25, the content transfer apparatus management section 13 sends a message "connection authorized" to the content transfer apparatus 20 via the content transfer control section 12 and communication interface 11, and completes the processing for the content transfer apparatus 20.

When the user selects "NO" in the user interface 202 shown in FIG. 8, the processing proceeds to step ST32 according to the decision at step ST30. At step ST32, the content transfer apparatus management section 13 registers it to the content transfer apparatus management table as a connection unauthorized apparatus. Thus, the content transfer apparatus management table 101 in the initial state becomes the content transfer apparatus management table 103 after the registration, in which the content transfer apparatus 20 is indicated as a "connection unauthorized" device. Then, at step ST26, the content transfer apparatus management section 13 sends a message "connection unauthorized" to the content transfer apparatus 20 via the content transfer control section 12 and communication interface 11, and completes the processing for the content transfer apparatus 20.

On the other hand, if the received identifier information has already been registered in the content transfer apparatus management table in the processing at step ST22 of FIG. 7, the processing proceeds to step ST24 according to the decision at step ST23. At step ST24, the content transfer apparatus management section 13 checks the connectable/unconnectable column of the identifier information in the content transfer apparatus management table. If it indicates "authorized", the processing proceeds to step ST25 at which the content transfer apparatus management section 13 sends the message "connection authorized" to the content transfer apparatus 20 via the content transfer control section 12 and communication interface 11, and completes the processing for the content transfer apparatus 20. At step ST24, if the value in the connectable/unconnectable column indicates "unauthorized", the processing proceeds to step ST26 at which the content transfer apparatus management section 13 sends the message "connection unauthorized" to the content transfer apparatus 20 via the content transfer control section 12 and communication interface 11, and completes the processing for the content transfer apparatus 20.

As a result of the processing at step ST14 of FIG. 5, as for the content transfer apparatus 20 to which the message "connection unauthorized" is sent, there is no subsequent processing in the flow of FIG. 5 and the entire processing is completed here. In the following description, the subsequent operation in the flow will be described of the case where the message "connection authorized" is sent as a result of the processing at step ST14.

At step ST15 of FIG. 5, the content server apparatus 10 decides the contents to be transmitted to the content transfer apparatus 20.

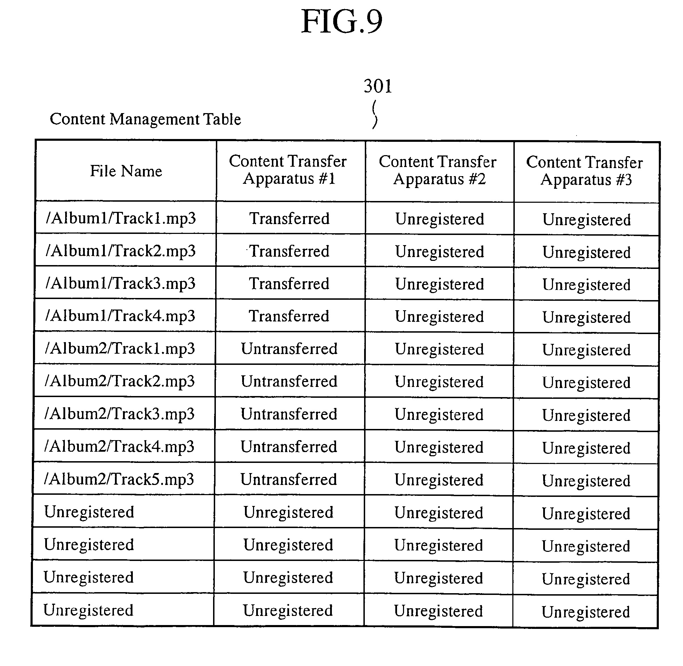

FIG. 9 is a diagram showing an example of a content management table 301 the content management section 15 of the content server apparatus 10 maintains and manages. Every time the user registers a new content to the content storing section 16 of the content server apparatus 10, it is registered to this table. In the state of FIG. 9, two music albums, Album1 and Album2, are registered. In addition, the content transfer apparatus 20 having the identifier information 0×0123456701234567, which is the connection party in this example, is registered in the content transfer apparatus management table 102 in FIG. 6 as a content transfer apparatus #1. In the content management table 301 of FIG. 9, it also corresponds to the content transfer apparatus #1. It is found in the example of FIG. 9 that the Album1 has already been transferred to the content transfer apparatus #1, but the Album2 has not yet been transferred. Accordingly, at step ST15 of FIG. 5, the files Track1.mp3 - Track5.mp3 of the Album2 are decided as the contents to be transferred.

Next, at step ST16 of FIG. 5, the content transfer control section 12 of the content server apparatus 10 transmits a "content transfer start notification" message to confirm the completion of the receiving preparation at the content transfer apparatus 20. Receiving a message "content transfer start acknowledgement response" from the content transfer apparatus 20 at step ST17, the content server apparatus 10 completes the preparation, and transmits at step ST18 the contents of the Track1.mp3 - Track5.mp3 decided at step ST15. Every time the content transfer control section 12 transmits the contents, it notifies the content management section 15 of the completion of the transmission, and the content management section 15 changes the state of the contents of the content management table 301 to "transferred". After completing the transmission of all the contents in this way, the content transfer control section 12 finally transmits a "content transfer completion notification" message to the content transfer apparatus 20 at step ST19, and completes the processing flow of FIG. 5.

The foregoing processing enables the content server apparatus 10 to transfer, among the contents registered therein, all the contents that have not yet transferred to the content transfer apparatus 20 as the connection party.

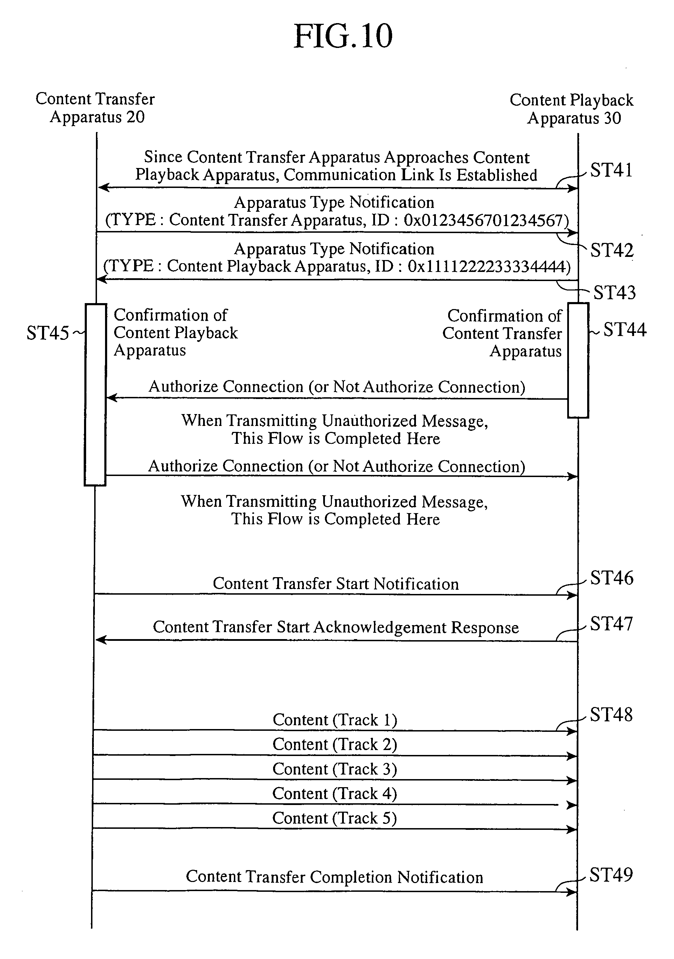

FIG. 10 is a diagram illustrating a processing sequence between the content transfer apparatus 20 and the content playback apparatus 30 from the time when the content playback apparatus 30 and content transfer apparatus 20 detect one another to the time when the contents are transferred. Referring to FIG. 10, the operation until the contents transferred to the content transfer apparatus 20 are transferred to the content playback apparatus 30 will be described.

At step ST41, when the user gets into the car with the content transfer apparatus 20 and comes close to the content playback apparatus 30 (the car audio system in this example), the content playback apparatus 30 and the content transfer apparatus 20 detect one another, and a communication link is established.

At step ST42, the content transfer apparatus 20 notifies the content playback apparatus 30 of its own apparatus type (content transfer apparatus) and identifier information (a value 0×0123456701234567 in this example). At step ST43, the content playback apparatus 30 notifies the content transfer apparatus 20 of its own apparatus type (content playback apparatus) and identifier information (a value 0x1111222233334444 in this example). Through the processing at steps ST41 and ST42, they recognize the types of the communication party apparatuses of each other.

At step ST44 and step ST45, they check with each other whether the party equipment is an apparatus registered as an appropriate communication party, and require, when it is a new device, the user to make a decision as to whether it is to be registered or not. As a result, they make a decision whether to authorize or reject communication, and transmit a "connection authorized" or "connection unauthorized" message to each other. Since the processing at step ST44 and step ST45is the same as the processing at step ST14 of FIG. 5, the detailed description thereof will be omitted here.

When one or both of the apparatuses transmit the "connection unauthorized" message, there is no subsequent processing and the entire processing is completed here. In the following description, the subsequent operation will be described of the case where both the content playback apparatus 30 and content transfer apparatus 20 transmit "connection authorized".

At step ST46, before starting transmission of the contents, the content transfer apparatus 20 transmits the "content transfer start notification" message to confirm the completion of the receiving preparation of the content playback apparatus 30.

At step ST47, receiving the "content transfer start acknowledgement response" message from the content playback apparatus 30, the content transfer apparatus 20 finds that the preparation has been completed, and transmits to the content playback apparatus 30 the contents (Track1.mp3 - Track5.mp3) the content transfer apparatus 20 possesses at present at step ST48. The content playback apparatus 30 records the received contents in the content storing section 34. After completing transfer of all the contents, the content transfer apparatus 20 sends at step ST49 the "content transfer completion notification" message to the content playback apparatus 30, and completes the processing sequence of FIG. 10. The foregoing processing enables the content transfer apparatus 20 to transfer the contents temporarily stored therein to the content playback apparatus 30.

As described above, according to the present embodiment 1, while the user, who registers the new music CD data to the content server apparatus 10 (the PC of the user's own house with the functions of the present invention), comes and goes between user' s own house and the car equipped with the content playback apparatus 30 (car audio system with the functions of the present invention) with having the content transfer apparatus 20 (mobile phone terminal with the functions of the present invention), the contents registered in the content server apparatus 10 are transferred to the content playback apparatus 30 by the wireless LAN via the content transfer apparatus 20 without any particular operation of the user. Accordingly, the present embodiment 1 offers an advantage of being able to transfer and store the contents easily without requiring any particular operation.

### EMBODIMENT 2

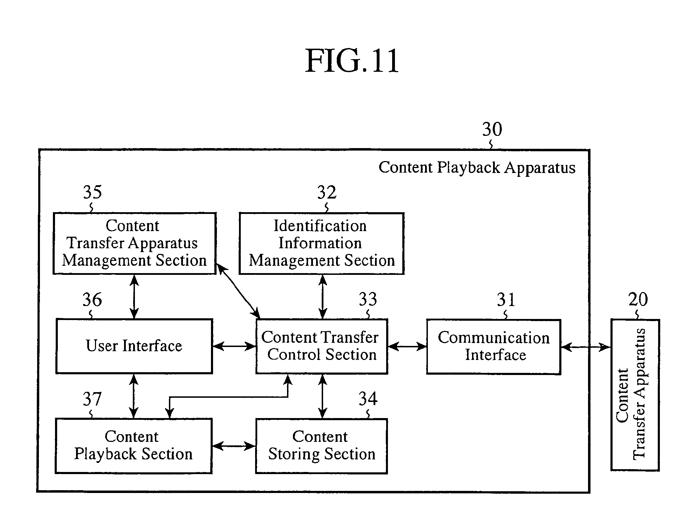

FIG. 11 is a block diagram showing a configuration of the content playback apparatus of an embodiment 2 in accordance with the present invention. It differs from FIG. 4 of the foregoing embodiment 1 in that the content transfer control section 33 is connected to the user interface 36 and the content playback section 37. As for the system configuration of the present embodiment 2 and the configurations of the content server apparatus and content transfer apparatus, they are the same as those of FIG. 1, FIG. 2 and FIG. 3 of the foregoing embodiment 1.

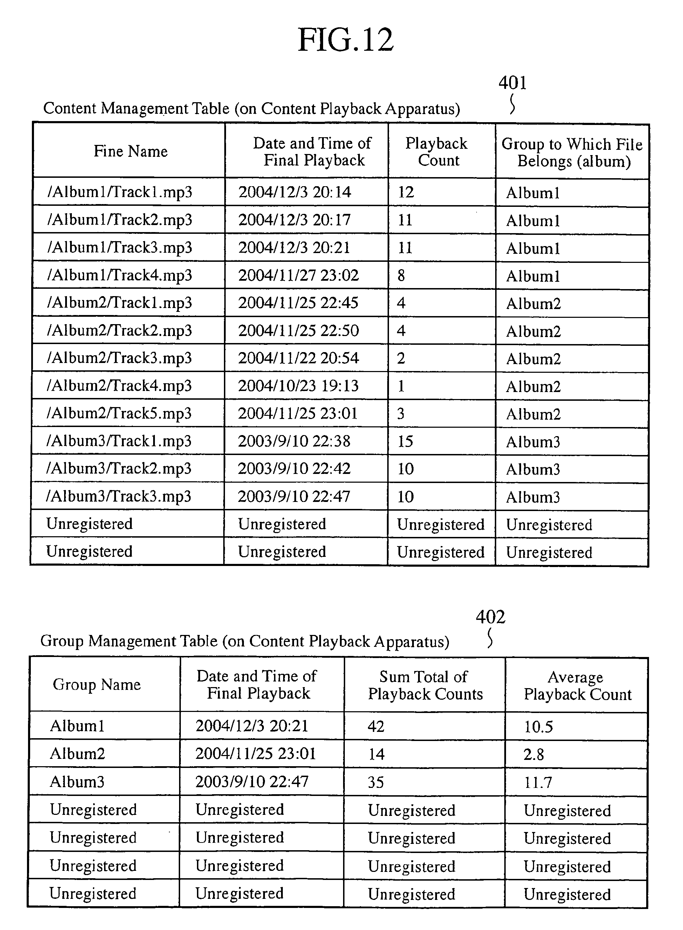

FIG. 12 is a diagram showing an example of a content management table 401 and that of a group management table 402 the content playback section 37 of the content playback apparatus 30 prepares and manages. When playing back the contents stored in the content storing section 34, the content playback section 37 prepares and manages the attribute information of each content in accordance with the form of the content management table 401 and group management table 402 as shown in FIG. 12.

The content management table 401 manages for each content its file name, the last playback date and time, the number of times of playbacks and the information about the group to which the content belongs. A method of deciding the group to which the content belongs will be described here. In this example, the file name includes directory information as well, and the directory name is used as the group name here. Files obtained by converting the music CD data to MP3 data are taken as an example here, and the directory name is supposed to correspond to an album name. As for a method of forming the group, it is possible to prepare a user interface the user designates separately, or to use album name or artist name information included in the ID3 tag of the MP3 file.

The group management table 402 manages for each group the playback date and time of the content finally played back among the contents belonging to the group, the sum total of the number of times of playbacks of all the contents belonging to the group, and the average number of times of playbacks of the contents belonging to the group.

Next, the operation will be described.
Here, the operation will be described which differs from that of the foregoing embodiment 1 when transferring the contents from the content transfer apparatus 20 to the content playback apparatus 30.

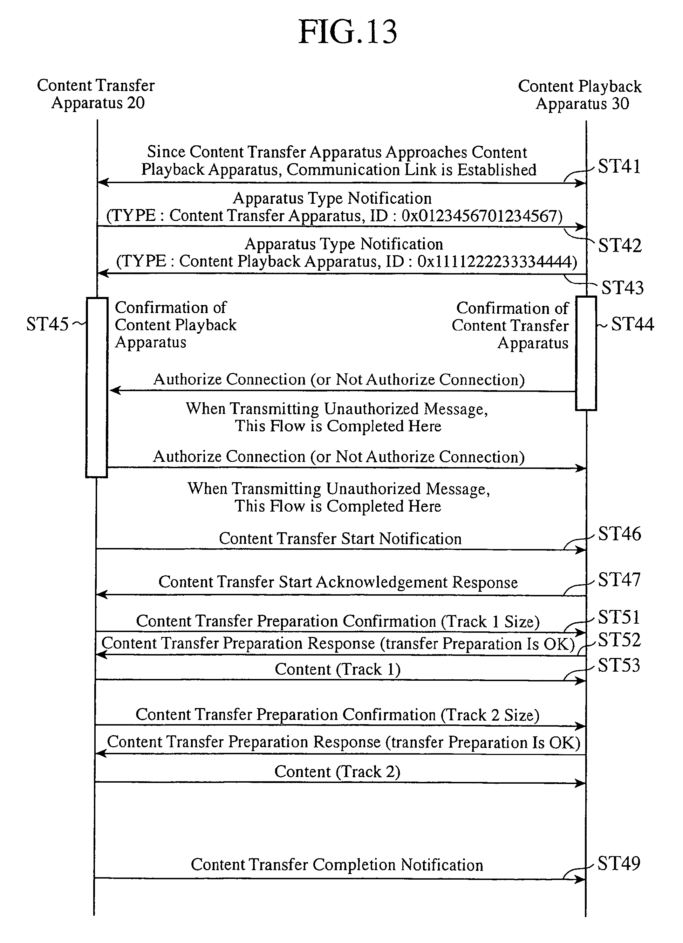

FIG. 13 is a diagram illustrating a processing sequence between the content transfer apparatus 20 and the content playback apparatus 30. The same steps as those of the foregoing embodiment 1 of FIG. 10 are designated by the same reference numerals and their description will be omitted here.

After the transmission of the content transfer start notification message at step ST46 and the transmission of the content transfer acknowledgement response message at step ST47, at step ST51, before transfer of each content, the content transfer control section 23 of the content transfer apparatus 20 transmits a content transfer preparation confirmation message to the content playback apparatus 30. The message includes the size of the content.

Receiving the content transfer preparation confirmation message, the content transfer control section 33 of the content playback apparatus 30 can recognize the size of the content transmitted next, and makes a decision on whether the content storing section 34 has enough free space to store the content. If it is not enough, referring to the content management table 401 and group management table 402 the content playback section 37 manages, the content transfer control section 33 of the content playback apparatus 30 secures enough free space by erasing contents decided by one of the following methods, and sends a content transfer preparation response back to the content transfer apparatus 20 at step ST52.

Here, let us enumerate the methods of deciding the contents the content transfer control section 33 erases to increase the free space of the content storing section 34.
(1) Referring to the "last playback date and time" in the content management table 401, erasing the contents in descending order of the elapsed time from the final playback to the present time.
(2) Referring to "the number of times of playbacks" in the content management table 401, erasing the contents in ascending order of the number of times of playbacks.
(3) Referring to the "last playback date and time" in the group management table 402, erasing the contents on a group by group basis in descending order of the elapsed time from the final playback to the present time.
(4) Referring to the "sumtotal of the number of times of playbacks" in the group management table 402, erasing the contents on a group by group basis in ascending order of the number of times of playbacks.
(5) Referring to "the average number of times of playbacks" in the group management table 402, erasing the contents on a group by group basis in ascending order of the average number of times of playbacks.

According to one of the foregoing methods designated by the user via the user interface 36, the content transfer control section 33 erases the contents. At step ST53, the content transfer apparatus 20 transmits the content to the content playback apparatus 30. The remaining processing is the same as that of the foregoing embodiment 1.

As described above, the present embodiment 2 offers the same advantage as that of the foregoing embodiment 1. In addition, the content transfer apparatus 20 notifies the content playback apparatus 30 of the size of the content before the transfer of the content so that the content playback apparatus 30 can secure the free space. Thus, the present embodiment 2 offers an advantage of being able to prevent the occurrence of the content that cannot be transferred because of the shortage of the free space.

### EMBODIMENT 3

As for an embodiment 3 in accordance with the present invention, a block diagram showing a configuration of its content playback apparatus is the same as that of FIG. 11 of the foregoing embodiment 2. In addition, its system configuration and configurations of its content server apparatus and content transfer apparatus are the same as those of FIG. 1, FIG. 2 and FIG. 3 of the foregoing embodiment 1.

In the present embodiment 3, the content server apparatus 10 is notified in advance of the types of the contents that can be played back and of the amount of the free space in the storage as the attribute information of the content playback apparatus 30, and of the amount of the free space of the content storing section 24 as the attribute information of the content transfer apparatus 20. This makes it possible to transfer the contents that can be played back without fail, or to transfer the contents of an appropriate amount considering the amount of the free space.

Next, the operation will be described.

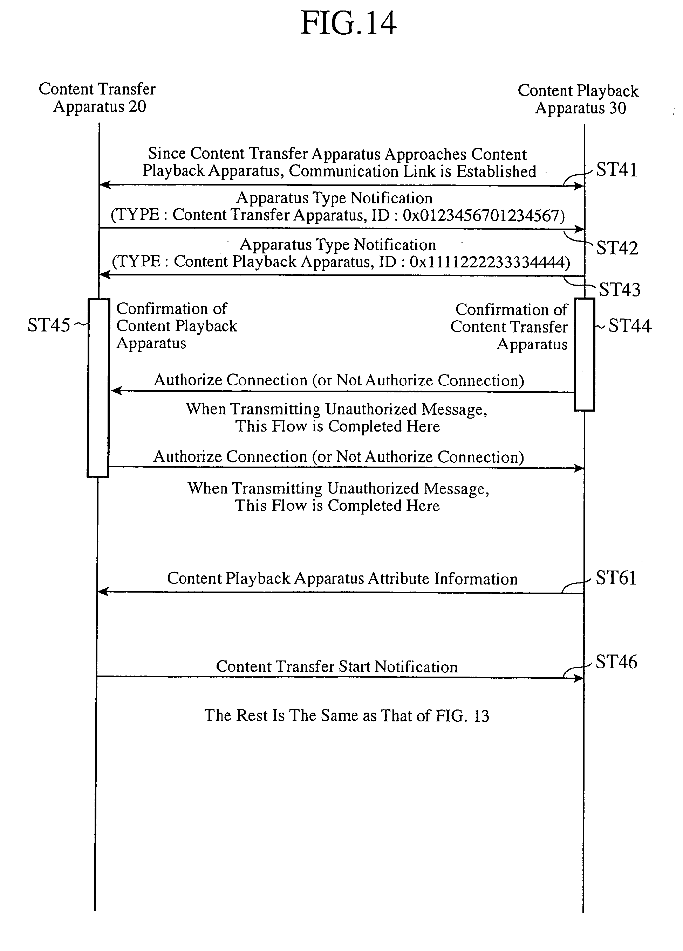

FIG. 14 is a diagram illustrating a processing sequence between the content transfer apparatus 20 and the content playback apparatus 30.

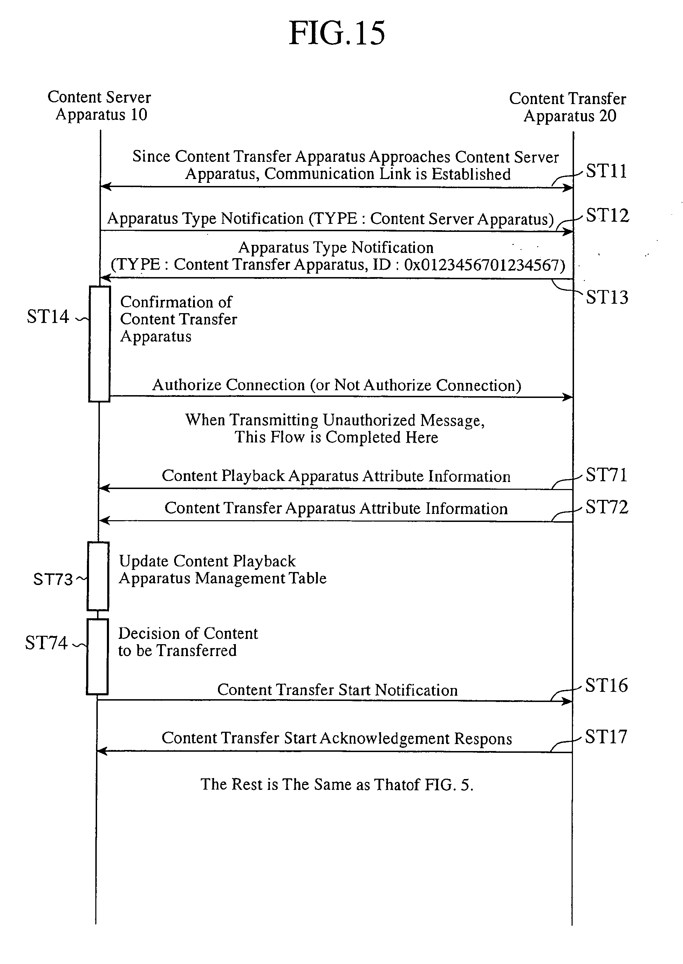

FIG. 15 is a diagram illustrating a processing sequence between the content server apparatus 10 and the content transfer apparatus 20. In FIG. 14 and FIG. 15, the same steps as those of FIG. 5 and FIG. 10 are designated by the same reference numerals and their description will be omitted here.

The present embodiment 3 is characterized by implementing efficient content transfer by notifying the content server apparatus 10 of the performance of the content playback apparatus 30 in advance. Thus, before first use, it is preferable to have the content transfer apparatus 20 hold the attribute information of the content playback apparatus 30 by establishing connection between the content transfer apparatus 20 and the content playback apparatus 30. When the content transfer apparatus 20 is connected to the content server apparatus 10 first, the content transfer is started without considering the performance of the content playback apparatus 30. Even in such a case, however, once the content transfer apparatus 20 has established the connection with the content playback apparatus 30, it can carry out efficient transfer thereafter considering the performance of the content playback apparatus 30.

First, when the content transfer apparatus 20 is connected to the content playback apparatus 30, the same processing at that of the foregoing embodiment 1 is carried out as shown in FIG. 14. The flow up to authorizing connection to each other is the same as that of the foregoing embodiment 1. Subsequently, in the case of the present embodiment 3, at step ST61, the content transfer control section 33 of the content playback apparatus 30 transfers the attribute information of the content playback apparatus 30 to the content transfer apparatus 20. The attribute information includes such information items as enumerated below.
(1) Type information of the contents that can be played back, which is obtained from the content playback section 37.
(2) Types of contents expected to be transmitted from the content server apparatus 10, which are obtained from the user via the user interface 36.
(3) Information about the amount of the free space in the content storing section 34.

The subsequent sequence for transferring the contents is the same as that of the foregoing embodiment 1. In the present embodiment 3, however, the content transfer apparatus 20 has the type information of the contents that can be played back by the content playback apparatus 30. Accordingly, when the content transfer apparatus 20 recognizes in advance that the content to be transferred cannot be played back, but can be converted into a format that can be played back, the content transfer control section 23 of the content transfer apparatus 20 transmits after converting the content into the format that can be played back by the content playback apparatus 30. Here, although the content transfer control section 23 of the content transfer apparatus 20 transmits the content after converting it into the format that can be played back by the content playback apparatus 30, this is not essential. For example, in the processing illustrated FIG. 15, which will be described later, the content transfer control section 12 of the content server apparatus 10 can transmit the content after converting the content into the format that can be played back by the content playback apparatus 30.

Next, when the content transfer apparatus 20 maintaining the attribute information of the content playback apparatus 30 is connected to the content server apparatus 10, the processing as illustrated in FIG. 15 is carried out.
In the processing sequence of FIG. 15, the processing up to authorizing the connection to each other is the same as that of FIG. 5 of the foregoing embodiment 1. In the present embodiment 3, at step ST71, the content transfer control section 23 of the content transfer apparatus 20 transmits the attribute information of the content playback apparatus 30 to the content server apparatus 10, and at step ST72, the content transfer control section 23 transmits the amount of the free space of the content storing section 24 to the content server apparatus 10 as the attribute information of the content transfer apparatus 20.

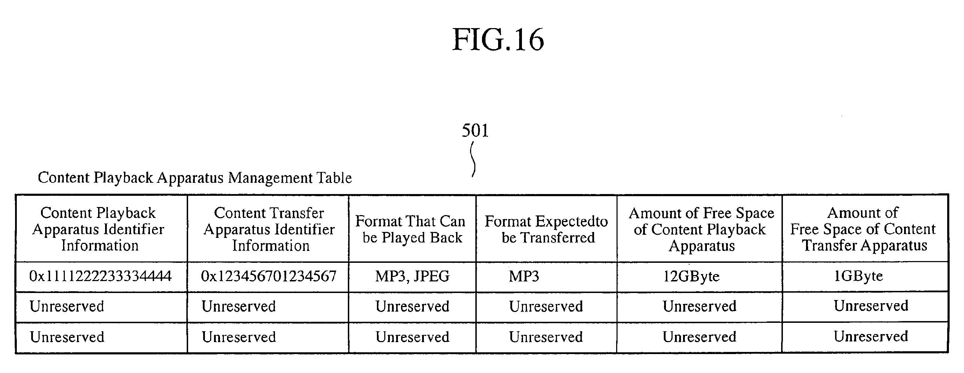

FIG. 16 is a diagram showing a content playback apparatus management table 501 the content transfer control section 12 of the content server apparatus 10 manages.
At step ST73, the content transfer control section 12 of the content server apparatus 10 updates the content playback apparatus management table 501 as illustrated in FIG. 16 in accordance with the received attribute information of the content playback apparatus 30 and the attribute information of the content transfer apparatus 20.

At step ST74, the content transfer control section 12 of the content server apparatus 10 decides the contents to be transferred to the content transfer apparatus 20. In this case, it decides the contents according to the information of the content playback apparatus management table 501 and that of the content management table 301 described in the foregoing embodiment 1. In the example of FIG. 16, the format the content playback apparatus 30 wishes for is MP3 audio, and the free space of the content transfer apparatus 20 is 1 GB. Thus, the content transfer control section 12 of the content server apparatus 10 transmits MP3 files to the content transfer apparatus 20 as much as possible within 1 GB.

If no untransmittedMP3 file is present, the content transfer control section 12 of the content server apparatus 10 converts a file that is untransmitted and is convertible to an MP3 file by the content server apparatus 10, and transmits it to the content transfer apparatus 20 after the conversion. Even if the amount does not reach the transmittable 1 GB, the content server apparatus 10 transmits to the content transfer apparatus 20 a JPEG file or a file with another format converted to a JPEG file, which is other than the desired MP3 and can be played back. Even if the amount still does not reach 1 GB, the content server apparatus 10 can try to transfer a file with another format because the content transfer apparatus 20 may have a file format converting capacity.

In addition, when the content transfer apparatus 20 knows the formats the content playback apparatus 30 can play back in advance, the content transfer apparatus 20 can transmit to the content server apparatus 10 the file formats convertible to those formats with putting them in the attribute information. In the present embodiment 3, the content playback apparatus 30 wishes for the MP3 file. Thus, when the content transfer apparatus 20 has the capacity of converting PCM audio to MP3, the content transfer apparatus 20 can transmit to the content server apparatus 10 not only the desired format MP3 but also the PCM.

As described above, the present embodiment 3 offers the same advantage as that of the foregoing embodiment 1. In addition, the content server apparatus 10 can recognize the capacity of the content playback apparatus 30 or of the content transfer apparatus 20 before transfer of the contents. Accordingly, the present embodiment 3 offers an advantage that the content server apparatus 10 can carry out efficient content transfer.

### INDUSTRIAL APPLICABILITY

The present invention is broadly applicable to playback apparatuses of music and the like, which are mounted on mobile units of cars or trains and to their communications systems.

## Claims

1. A content server apparatus that transfers stored contents to a content transfer apparatus, said content server apparatus comprising:
a content storing section for storing registered contents;
a content management section for maintaining a content management table that manages, for each content stored in said content storing section, as to whether the content has already been transferred to said content transfer apparatus or not;
a content transfer apparatus management section for maintaining a content transfer apparatus management table that manages, for each identifier information for uniquely identifying said content transfer apparatus, a connectable/unconnectable state decided by a user; and
a content transfer control section for acquiring the identifier information of said content transfer apparatus to check connection authorization by referring to the content transfer apparatus management table, and for transferring to said content transfer apparatus an untransferred content among the contents stored in said content storing section by referring to the content management table.

2. The content server apparatus according to claim 1, wherein said content transfer apparatus management section receives the identifier information from said content transfer apparatus, checks whether said content transfer apparatus is an already registered content transfer apparatus or a new content transfer apparatus, requests, in the case of the new content transfer apparatus, the user to decide whether to register as a communication party or not, and registers a decision result to the content transfer apparatus management table.

3. The content server apparatus according to claim 1, wherein said content management section updates the content management table when said content transfer control section transfers the untransferred content to said content transfer apparatus.

4. The content server apparatus according to claim 1, wherein said content transfer control section receives attribute information of a content playback apparatus and attribute information of the content transfer apparatus transmitted from said content transfer apparatus, and transfers the content according to the received attribute information of said content playback apparatus and attribute information of said content transfer apparatus, the attribute information of said content playback apparatus being one of type information about contents that can be played back by said content playback apparatus, a type of contents expected to be received, and an amount of free space for storing the contents, and the attribute information of said content transfer apparatus being information used by said content transfer apparatus for storing the contents.

5. The content server apparatus according to claim 4, wherein said content transfer control section transfers the content after converting the content stored in said content storing section to a format said content playback apparatus can play back according to the type information about the contents that can be played back by said content playback apparatus transmitted from said content transfer apparatus.

6. A content transfer apparatus that transfers contents transferred from a content server apparatus to a content playback apparatus, said content transfer apparatus comprising:
an identification information management section for maintaining identifier information capable of uniquely identifying said content transfer apparatus itself;
a content storing section for storing contents transferred;
a content playback apparatus management section for maintaining identifier information for uniquely identifying a content playback apparatus registered as an appropriate communication party; and
a content transfer control section for transmitting the identifier information said identification information management section retains to said content server apparatus and for causing said content storing section to store the contents transferred from said content server apparatus, for transmitting the identifier information said identification information management section retains to said content playback apparatus to acquire the identifier information of said content playback apparatus, for confirming, by referring to the identifier information retained in said content playback apparatus management section, that said content playback apparatus is an appropriate communication party, and for transferring the contents stored in said content storing section to said content playback apparatus.

7. The content transfer apparatus according to claim 6, wherein said content playback apparatus management section receives the identifier information from said content playback apparatus, checks whether said content playback apparatus is an already registered content playback apparatus or a new content playback apparatus, requests, in the case of the new content playback apparatus, the user to decide whether to register as a communication party or not, and registers a decision result.

8. The content transfer apparatus according to claim 6, wherein said content transfer control section transmits, before transferring a content stored in said content storing section to said content playback apparatus, a size of the content to be transferred to said content playback apparatus.

9. The content transfer apparatus according to claim 6, wherein said content transfer control section retains an amount of free space of said content storing section as attribute information of said content transfer apparatus, and transmits attribute information of said content playback apparatus transmitted from said content playback apparatus and the retained attribute information of said content transfer apparatus to said content server apparatus, the attribute information of said content playback apparatus being one of type information about contents that can be played back, a type of contents expected to be received, and an amount of free space of said content storing section transmitted from said content playback apparatus.

10. The content transfer apparatus according to claim 9, wherein said content transfer control section transfers the contents after converting the contents stored in said content storing section to a format said content playback apparatus can play back according to the type information about the contents that can be played back transmitted from said content playback apparatus.

11. A content playback apparatus that receives and stores contents transferred from a content transfer apparatus and plays back the stored contents, said content playback apparatus comprising:
an identification information management section for maintaining identifier information capable of uniquely identifying said content playback apparatus itself;
a content storing section for storing contents transferred;
a content transfer apparatus management section for maintaining identifier information for uniquely identifying a content transfer apparatus registered as an appropriate communication party;
a content transfer control section for transmitting the identifier information said identification information management section retains to said content transfer apparatus, for acquiring the identifier information of said content transfer apparatus and confirming, by referring to the identifier information retained in said content transfer apparatus management section, that said content transfer apparatus is an appropriate communication party, and for receiving the contents transferred from said content transfer apparatus and causing said content storing section to store the contents; and
a content playback section for playing back the contents stored in said content storing section.

12. The content playback apparatus according to claim 11, wherein said content transfer apparatus management section receives the identifier information from said content transfer apparatus, checks whether said content transfer apparatus is an already registered content transfer apparatus or a new content transfer apparatus, requests, in the case of the new content transfer apparatus, the user to decide whether to register as a communication party or not, and registers a decision result.

13. The content playback apparatus according to claim 11, wherein
said content playback section manages a playback result for each content or for each group of designated contents; and
said content transfer control section erases the content stored in said content storing section according to a size of the content notified from said content transfer apparatus before transfer of the content and according to the playback result said content playback section manages.

14. The content playback apparatus according to claim 11, wherein said content transfer control section transmits,before receiving a content from said content transfer apparatus, attribute information of said content playback apparatus to said content transfer apparatus, the attribute information of said content playback apparatus being one of type information about contents that can be played back, a type of contents expected to be received, and an amount of free space of said content storing section.
